# EUROPEAN PATENT SPECIFICATION

(11) **EP 0 727 304 B1**
(45) Date of publication and mention of the grant of the patent: **20.06.2001**
(21) Application number: 96101961.9
(22) Date of filing: 10.02.1996
(51) Int. Cl.: B29C 70/30

(54) **Method of making a structural element and the element so made**
Verfahren zur Herstellung von Strukturbauteilen und danach hergestelltes Bauteil
Procédé de fabrication d'un élément de structure et élément ainsi obtenu

(30) Priority: 17.02.1995 FI 950720
(43) Date of publication of application: 21.08.1996
(73) Proprietor: Muovilami Oy, FIN-63700 Ähtäri (FI)
(72) Inventor: Aho, Esko, FIN-63700 Ähtäri (FI)
(74) Representative: Dr. Weitzel & Partner

(56) References cited:
- EP-A- 0 570 213
- WO-A-94/07674
- DE-A- 3 145 334
- FR-A- 1 528 068
- US-A- 4 410 642
- US-A- 4 556 529
- US-A- 4 879 152

## Description

The invention relates to a method of making a sandwich-type structural element, which includes the steps as per the Preamble of claim 1. The invention also relates to a sandwich-type structural element produced with the method, such as a door or a wall element with improved properties.

Structural elements made of reinforced plastic, such as doors or wall elements, have long been in production. Often, the manufacturing method has been cold moulding or RTM in the mould at a standard temperature, which produces a rigid structural element. Such elements are generally used in wet and hygienic rooms, cold rooms, indoor swimming pools, hospitals, clean rooms of the medical and electronic industries.

A cold moulded structural element, such as a structural element made in a mould by a cold moulding or RTM method, has the disadvantage of timing the setting process of the polyester. If the polyester sets too early, the surface of the product will contain blisters, and a long setting process causes a time-consuming production and weak strength properties. The production times of elements made with the methods mentioned above are also long. In addition, the high temperature resulting in an exothermal reaction, which causes weakening of colour and cracks in the product, complicates the production of larger articles.

It is the object of the present invention to solve the problems mentioned above. This is achieved by the characterising part of claim 1.

WO 94/07674 discloses a method as per the preamble of claim 1. The said document is quiet regarding step 1.7, i. e. with regard to placing of a solid core on a layer of a reinforcing material.

According to one embodiment of the invention, in step 1.1, the unsaturated polyester of the gelcoat coating comprises a polyester, which has been selected from the reaction products of glycols, diacids or their anhydrides and unsaturated diacids and monoacids or their anhydrides, and an unsaturated monomer, selected for example from among the group of ethylenically unsaturated aromatic compounds and esters of acrylic acids. Such polyesters have been discussed in technical literature, for example, in the chapter Polyesters, unsaturated, of the Encyclopaedia of Polymer Science and Engineering, Mark, Bikales, Overberger, Menges, Second Edition (1988), Volume 12, pp. 256-290, which is enclosed here for use as reference material. The gelcoat coating typically comprises a polyester which is a reaction product of a glycol, such as ethylene glycol, diacid or its anhydride, such as phtalic acid or its anhydride, and an unsaturated diacid or its anhydride, such as maleic acid or its anhydride. A typical unsaturated monomer included in the gelcoat coating is an ethylenically unsaturated aromatic compound, such as styrene.

In addition to an unsaturated polyester and a free radical catalyst, the gelcoat coating may be comprised of pigments and/or thixotropic modifying agents.

According to one embodiment of the invention, step 1.1 of the method comprises applying a layer of gelcoat coating directly to the surface of the mould, preferably by injection. This produces an even, non-fibrous film on the inner surface of the mould. Such a film typically has a thickness in the range of from 300 µm to 500 µm.

As the gelcoat coating is usually allowed to set at room temperature or at a temperature approximating room temperature, the first free radical catalyst of the coating is usually selected from among compounds formed of peroxides and accelerators. As mere normal peroxides do not decompose into radicals at temperatures below 35 °C and thus do not catalyse a hardening reaction between the polymer and an unsaturated monomer, the free radical catalysts used in the gelcoat coating are usually said compounds of peroxides and accelerators, which normally join together to form a redox pair. A redox pair preferably used as the said first free radical catalyst is the redox pair of hydroperoxide and a metallic salt accelerator. Examples of such preferred redox pairs include the redox pairs of methyl ethyl ketone hydroperoxide (MEKP) and cobalt octoate or cobalt naphthenate, and the redox pair of cumene hydroperoxide and manganese naphthenate or manganese octoate. The most preferable free radical catalyst of the gelcoat coating is the redox pair of the said methyl ethyl ketone hydroperoxide (MEKP) and cobalt octoate or cobalt naphthenate.

Auxiliary accelerators can be added to the redox pairs mentioned above, so that the first free radical catalyst of step a) of the method of the invention comprises, in addition to the said redox pair, for example a tertiary aromatic amino accelerator, preferably dimethylaniline (DMA), diethylaniline (DEA), dimethylparatoxidine (DMPT).

The concentration of the first free radical catalyst in the gelcoat coating, used in step 1.1 of the method of the invention, may vary considerably, and the desired setting speed and result are obtained by optimising the concentration of the free radical catalyst in the gelcoat coating. According to one embodiment of the invention, the preferred content of the first free radical catalyst is in the range of from 0.1 to 10%, preferably between circa 0.5 and 5% and most preferably between 0.75 and 2.5% by weight of the gelcoat coating.

According to a wider interpretation of the method of the invention, in step 1.1 a layer of the gelcoat coating may be applied to any inner surface or surfaces of the mould. However, it is preferable to apply a layer of gelcoat coating to both of the inner surfaces of a two-part mould.

In step 1.2 of the method of the invention, the temperature of the coating on the inner surface of the mould is kept so that the temperature of the gelcoat coating is in the range of from 0 to 35°C, in order to activate the free radical catalyst and partially set the gelcoat coating. The temperature is selected so that the said chosen first free radical catalyst is activated as desired, and a bridging reaction between the polyester and unsaturated monomer causes the the gelcoat coating to set. The inner surface of the mould is preferably kept so that the temperature of the gelcoat coating is in the range of from circa 20 to 35°C, more preferably between 30 and 35°C. Reinforced plastic usually sets at the higher temperatures set out above. Preferably the gelcoat coating is partially set so that the coating is stickily dry. Such setting usually takes from circa 0.5 to 1 hour, preferably circa 1 to 3 hours. Thus, the reinforcing material connects more easily to the layer of gelcoat coating on the inner surface of the mould.

In step 1.3 of the method of the invention, a layer of a reinforcing material comprising an unsaturated polyester and fibre, and comprising a second free radical catalyst, is applied to the layer of partially cured gelcoat coating. The unsaturated polyester is preferably in liquid form. According to one embodiment, the application is carried out either by hand or by injection, preferably by laminating by hand, whereupon the gelcoat coating is alternately coated with the fibre of the reinforcing material, alternately with the unsaturated polyester component of the reinforcing material, comprising the said second free radical catalyst. A practicable method of application is resin transfer moulding (RTM).

The fibre of the reinforcing material of step 1.3 is usually selected from among aramid fibres (Kevlar fibres), carbon fibres, and fibreglass. The preferred fibre is fibreglass, preferably in the form of a chopped strand mat and more preferably in the form of glass filaments. The unsaturated polyester of the reinforcing material of step 1.3 comprises a polyester and an ethylenically unsaturated monomer, whereupon the material sets as a result of a reaction between the unsaturated linkages of the polyester and the monomer, catalysed by the said second free radical catalyst. The polyester component is usually selected from among the reaction products of glycols, diacids or their anhydrides and unsaturated diacids and monoacids or their anhydrides. Such polyesters have been discussed in technical literature, for example, in the chapter Polyesters, unsaturated, of the Encyclopaedia of Polymer Science and Engineering, Mark, Bikales, Overberger, Menges, Second Edition (1988), Volume 12, pp. 256-290, which is enclosed here for use as reference material. The gelcoat coating typically comprises a polyester which is a reaction product of a glycol, such as ethylene glycol, diacid or its anhydride, such as phtalic acid or its anhydride, and an unsaturated diacid or its anhydride, such as maleic acid or its anhydride. Examples of typical reaction products include the reaction products of glycol, such as ethylene glycol, diacid or its anhydride, such as phtalic acid or its anhydride, and an unsaturated diacid or its anhydride, such as maleic acid or its anhydride. Examples of bridging unsaturated monomer components include ethylenically unsaturated aromatic compounds, such as styrene. A particularly suitable polyester is Neste A 300 E, which is a glycoline, a product based on orthophtalic acid and maleic anhydridine.

The reinforcing material of step 1.3 of the method of the invention also comprises a free radical catalyst. This second free radical catalyst can be any catalyst acting at a temperature in the range of from circa 35 and 175°C, such as an azo compound similar to azo-bis-isobutyronitrile or an organic peroxide. Preferably, however, the said second free radical catalyst is an organic peroxide included in one of the following peroxide groups: diasyl peroxides, acetyl alkyl sulphonyl peroxides, dialkyl peroxide carbonates, tert-alkyl peroxide esters, tert-alkyl peroxide alkanols, oo-tert-alcyl o-alkyl mono peroxy carbonates, di(tert-alkyl peroxy) ketale, di(tert-alkyl) peroxides, tert-alkyl mono peroxy carbonates, and ketone peroxides. Peroxides included in these groups have been discussed for example in the chapter Peroxy Compounds, Encyclopaedia of Polymer Science and Engineering, Mark, Bikales, Overberger, Menges, Second Edition (1988), Volume 11, pp. 1-21, which is enclosed here for use as reference material. A typical suitable peroxide is a tert-alkyl peroxide alkanol, such as tert-butyl peroxy 3,3,5 -tri-methylhexanol.

As the invention is based on the fact that the reinforcing material is cured at a higher temperature than the gelcoat coating, the selected second free radical catalyst must be thermally degradable, that is, become activated at the said higher temperature. The temperature of the selected peroxide, at which temperature the half life is 10 hours, is preferably between 50 and 172°C, more preferably between 60 and 120°C. Naturally, this requires that the tendency of the said free radical catalyst to heterolytically decompose into initiating radicals is taken into account. Examples of organic peroxides preferably used as a second free radical catalyst include dilauroyl peroxide, tert-butyl peroctoate, dibenzoylperoxide, 2,5-dimethyl 2,5-di(2-ethyl hexanyl peroxide)-hexane, tert-butyl perbenzoate, di-tert-butyl peroxide and dicumyl peroxide. Examples of especially preferable peroxides include lauroyl peroxide, tert-butyl peroctoate, benzoyl peroxide, and Trigonox 42PR.

While peroxide groups and individual peroxides suitable for use as the second free radical catalyst have been listed above, it must be taken into account that intermixtures of these peroxides, and mixtures of these peroxides and various modifying agents, such as moderator materials or accelerators, can be used in the reinforcing material of the method of the present invention. The most important point is that the curing of the gelcoat coating at a lower temperature and the curing of the reinforcing material at a higher temperature are carried out according to the main idea of the invention.

The concentration of the second free radical catalyst, used in step 1.3 of the method of the invention, may vary according to the required efficiency and speed of curing. According to one embodiment of the invention, the concentration of the said second free radical catalyst is in the range of from 0.1 to 10%, preferably from circa 0.5 to 5%, and more preferably from 1.0 to 2.5% by weight of the reinforcing material.

The reinforcing material can be applied to any inner surface of a mould consisting of at least two parts, including surfaces not coated with gelcoat coating. However, in step 1.3), it is preferable to apply a layer of the said reinforcing material to a layer of gelcoat coating on both of the inner surfaces of a two-part mould.

After a layer of the reinforcing material has been applie to a layer of the partially cured gelcoat coating, the mold is closed (step 1.4). The solid core comprises a solid substance, inert in relation to curing, which can be a powder, a crushed aggregate, a granulate, or consist of smaller or larger objects of varying forms or monolithic objects. According to a preferable embodiment, the solid core of the structural element is a laminar structure. Such laminae are generally used in hatches and doors, as well as panels, both outdoors and indoors. The solid core of the structural element, such as a laminar structure, can consist of any solid material, such as stone, ceramics, wood, mineral or fibreglass or plastic materials. The material used is preferably a fire-resistant material. It may also be a laminate or a mixture of these materials.

It is preferable that the solid core material of the structural element is a cellular plastic selected from among the following group: epoxy resin, phenolic plastic, polyvinyl chloride (PVC) plastic, polyurethane plastic, urea formaldehyde resin, expanded elastomer, polyethylene plastic, polypropylene plastic, silicone plastic. Especially suitable are rigid cellular plastics, such as epoxy resin, phenolic plastic, polyvinyl chloride (PVC) plastic, polyurethane plastic, urea formaldehyde resin, preferably polvurethane plastic, polyvinyl chloride plastic, polyethylene plastic, and most preferably polyurethane plastic. Suitable cellular plastics have been described in, for example, the chapter "Cellular Materials" of the Encyclopaedia of Polymer Science and Engineering, Second Edition (1985), Volume 3, pp. 1-59, which is enclosed here for use as reference material.

Generally, the solid core of the structural element, described in step d) of the method of the invention, is placed on the reinforcing material on one of the two inner surfaces of a two-part mould. After this, step e) of the method comprises closing the mould around the solid core. Thus, the two parts of the mould are preferably joined together so that the amount of air in the mould remains at an acceptable level.

After the mould has been closed, step 1.5 comprises warming the mould so that the temperature of the reinforcing material is in the range of from 35 to 175°C. A more suitable temperature is in the range of from circa 35 to 100°C, preferably in the range of from 40 to 80°C. Even though the temperature is selected from the described range, the desired thermal degradation temperature of the second free radical catalyst has a deciding effect on the selection. At this temperature, the second free radical catalyst becomes activated and the reinforcing material sets. As the reinforcing material is cured at a higher temperature than the gelcoat coating, the partially cured gelcoat coating also sets finally at this stage of the method.

The warming in step 1.5 of the method is preferably carried out with a simultaneous use of pressure. Such pressure is preferably in the range of from circa 1 to 10 N/cm², more preferably from circa 1 to 5 N/cm² and most preferably from circa 1 to 3 N/cm². According to one embodiment, the mould is warmed in step 1.5 by employing the pressure in short periods, for example, in periods of 10 to 15 seconds.

In step 1.6 of the method of the invention, the mould is opened and the blank consisting of the core material surrounded by the reinforcing material and a layer of gelcoat coating is removed and trimmed ,if necessary. The finishing stage may include typical late stages of polyester laminating and compression moulding, such as:
- secondary setting
- trimming
- finishing and
- fittings.

Fittings are used when doors, windows, hatches, etc., are made.

After step 1.6 the solid core of the structural element is placed on the layer of a reinforcing element (step 1.7).

As mentioned above, the invention also relates to a sandwich-type structural element made with the method set out above. Such elements include doors, hatches, panel parts, etc. The new improved method introduced here improves the strength properties of these elements, and the elements will not have blisters or other construction defects.

Thus, the present invention solves the problem of timing the setting process of polyester in the making of a sandwich-type door or other structural element, as well as improves the strength properties and structure of the reinforced plastic laminate in comparison with a door made with a cold moulding or RTM process. The invention significantly shortens the manufacturing time of a door or other structural element.

In the following, the invention will be described in detail with reference to an example, comprising a sandwich-type door structure, where a core is surrounded by a reinforced plastic laminate surface, which has a thickness of circa 2.5 mm. As core, for example, freon free polyurethanes or other hard expanded plastics can be used. The layer of reinforced plastic surrounds the sides of the door seamlessly, whereupon the door plate becomes tight and will not let water or dampness pass through. As a reinforced plastic structure, fibreglass-reinforced polyester can, for example, be used.

A door structure corresponding to the invention can be made, for example, as follows. To the inner surfaces of door moulds, having a temperature of from 30 to 35°C, there is injected a layer of an unsaturated polyester gelcoat coating, which is set with MEKP peroxide with an accelerator content of 1.5%. After the gelcoat coating has become stickily dry, both sides of the mould are loaded as follows: both door halves are loaded with (a required number of) layers of chopped strand mats and unsaturated polyester, for example, Neste A 300 E, with added thermally degradable peroxide Trigonox 42PR (1.5-2%). Neste A 300 E is an unsaturated polyester resin, which is based on a reaction product of glycol, orthophtalic acid and maleic anhydride. Trigonox 42PR is a tert-butyl peroxy 3,3,5-trimethyl-ethanol.

The core material of the door, into which the required holding blocks for mounting the fittings have been assembled, is placed in one side of the mould on the layers of fibreglass-reinforced plastic. The mould is closed and transferred into a flat press, whose compression force is increased by periods of 10 to 15 seconds up to a pressure corresponding to 1.9N/cm². The temperature of the planes of the press is 60°C. After the mould has been placed on the press, the heat is gradually conducted from the press planes to the mixture of polyester and glass through the metallic mould. When the mixture reaches the temperature of 40°C, the thermally degradable peroxide initiates the setting process of the polyester. After the reinforced plastic laminate has set, the mould is removed from the press and opened, and the door is removed from the opened mould. The blank is trimmed and the door is finished and equipped with hinges, locks and other fittings.

## Claims

1. A method of a making a sandwich-type structural element which comprises a solid core coated by a layer of fibrous reinforcing material and by an outer layer of gelcoat with a mould consisting of at least two parts, which includes the steps of:
a) applying a layer of gelcoat comprising an unsaturated polyester, which contains a first free radical catalyst to the inner surface of the mould,
b) keeping the inner surface of said mould at a first temperature of the gelcoat layer in order to activate the first free radical catalyst and partially set the gelcoat layer,
c) applying a layer of a fibrous reinforcing material comprising an unsaturated polyester and a second free radical catalyst, acting at a temperature of 35 to 175°C, to the partially hardened layer of gelcoat,
d) placing a solid core of the structural element on the layer of fibrous reinforcing material,
e) closing the mould around the solid core by joining together the two parts of the mould,
f) keeping the mould so that the layer of fibrous reinforcing material has a second temperature of 35 to 175°C in order to activate the second free radical catalyst and to set the fibrous reinforcing material, and
g) opening the mould and removing the blank and finishing it if necessary,
**characterised** in that
i) said first free radical catalyst acts at a temperature in the range of from circa 0 to 35°C, and that
ii) said first temperature is lower than said second temperature and in the range of from 0 to 35°C.

2. A method according to claim 1, **characterised** in that step a) comprises applying a layer of gelcoat coating directly to the inner surface of the mould, preferably by injection.

3. A method according to claim 1or 2, **characterised** in that the first free radical catalyst of step a) has been selected from among the compounds formed of peroxides and accelerators.

4. A method according to claim 3, **characterised** in that the first free radical catalyst of step a) comprises a redox pair of an organic hydroperoxide and a metallic salt accelerator, preferably a redox pair of methyl ethyl ketone hydroperoxide (MEKP) and cobalt octoate or cobalt naphthenate, or the redox pair of cumene hydroperoxide and manganese naphthenate or manganese octoate, most preferably a redox pair of methyl ethyl ketone hydroperoxide (MEKP) and cobalt octoate or cobalt naphthenate.

5. A method according to any preceding claim, **characterised** in that the concentration of the first free radical of the gelcoat layer is in the range of from 0.1 to 10%, preferably in the range of from circa 0.5 and 5% and most preferably in the range of from 0.75 and 2.5% by weight of the gelcoat layer.

6. A method according to any preceding claim, **characterised** in that step a) comprises applying a layer of said gelcoat layer to both sides of the interior of a two-part mould.

7. A method according to any preceding claim, **characterised** in that step b) comprises keeping the inner surface of the said mould so that the temperature of the gelcoat layer is in the range of from 20 to 35°C, preferably from circa 30 to 35°C.

8. A method according to any preceding claim, **characterised** in that step b) comprises keeping the inner surface of the said mould, so that the temperature of the gelcoat coating is in the range of from circa 0 to 35°C, until the surface of the layer of gelcoat coating has become stickily dry.

9. A method according to any preceding claim, **characterised** in that the fibre used in the fibrous reinforcing material of step c) is fibreglass, preferably in the form of a chopped strand mat

10. A method according to any preceding claim, **characterised** in that in step c), the second free radical catalyst has been selected from among the following: lauroyl peroxide, tertiary butyl peroctoate, benzoyl peroxide, preferably Trigonox 42PR.

11. A method according to any preceding claim, **characterised** in that in step c), the concentration of the second free radical catalyst is in the range of from 0.1 to 10%, preferably from circa 0.5 to 5%, most preferably from 1.0 to 2.5% by weight of the polyester component.

12. A method according to any preceding claim, **characterised** in that step c) comprises applying a layer of said reinforcing material to the layer of gelcoat coating on both sides of the interior of a two-part mould.

13. A method according to any preceding claim, **characterised** in that step d) comprises placing the inner core of the structural element, which is a laminar structure, on the layer of reinforcing material.

14. A method according to any preceding claim, **characterised** in that step d) comprises placing on the layer of reinforcing material the solid core material, which is a rigid cellular plastic selected from among the following group: epoxy resin, phenolic plastic, polyvinyl chloride (PVC) plastic, polyurethane plastic, urea formaldehyde resin, preferably polyurethane plastic, polystyrene plastic, polyvinyl chloride plastic, polyethylene plastic, and most preferably polyurethane plastic.

15. A method according to any preceding claim, **characterised** in that step d) comprises placing a solid core material on the reinforcing material on one of the two inner surfaces of a two-part mould.

16. A method according to any preceding claim, **characterised** in that step e) comprises closing the mould around the solid core material by connecting tightly the two parts of the mould so that the amount of the air in the mould remains at an acceptable level.

17. A method according to any preceding claim, **characterised** in that step f) comprises warming the mould so that the temperature of the reinforcing material is in the range of from circa 35 to 100°C, preferably from 40 to 80°C, to activate the second free radical catalyst and to cure the reinforcing material.

18. A method according to any preceding claim, **characterised** in that step f) comprises warming the mould with the simultaneous use of pressure, which is preferably in the range of from 1 to 5 N/cm², more preferably from 1 to 3 N/cm².

19. A method according to any preceding claim, **characterised** in that step f) comprises warming the mould by employing the pressure in short periods, for example, in periods of from 10 to 15 seconds.

20. A sandwich-type structural element, such as a door or a panel, preferably a door, which is produced with the method according to any preceding claim, which structural element has improved strength properties and does not have blisters.

## Patentansprüche

1. Verfahren zur Herstellung eines sandwichartigen Strukturelements, das einen festen Kern umfasst, welcher mit einer Schicht aus Faserverstärkungsmaterial und einer äußeren Gelschichtlage beschicht ist, mit einem aus zwei Teilen bestehenden Formstück, umfassend die Schritte:
a) Aufbringen einer Gelschichtlage, umfassend ein ungesättigtes Polyester, das einen ersten Radikalkatalysator enthält, auf die Innenfläche des Formstücks,
b) Halten der Innenfläche des Formstücks auf einer ersten Temperatur der Gelschichtlage, um den ersten Radikalkatalysator zu aktivieren und die Gelschichtlage teilweise zu härten,
c) Aufbringen einer Schicht aus Faserverstärkungsmaterial, umfassend ein ungesättigtes Polyester und einen zweiten Radikalkatalysator, wobei bei einer Temperatur von 35 bis 175°C vorgegangen wird, auf die teilweise gehärtete Gelschichtlage,
d) Einen festen Kern des Strukturelements auf die Schicht aus Faserverstärkungsmaterial setzen,
e) Das Formstück um den festen Kern herum schließen, indem die beiden Teile des Formstücks miteinander verbunden werden,
f) Das Formstück in einem Zustand halten, dass die Schicht aus Faserverstärkungsmaterial eine zweite Temperatur von 35 bis 175°C aufweist, um den zweiten Radikalkatalysator zu aktivieren und das Faserverstärkungsmaterial zu härten, und
g) Öffnen des Formstücks und Entfernen des Rohlings und bei Bedarf Oberflächenbehandlung des Rohlings,
dadurch gekennzeichnet, dass
i) der erste Radikalkatalysator bei einer Temperatur im Bereich von etwa 0 bis 35°C wirksam wird, und dass
ii) die erste Temperatur niedriger ist als die zweite Temperatur, und im Bereich von 0 bis 35°C.

2. Verfahren nach Anspruch 1, dadurch gekennzeichnet, dass Schritt a) das Aufbringen einer Gelschichtlagenbeschichtung unmittelbar auf die Innenfläche des Formstücks umfasst, vorzugsweise durch Injektion.

3. Verfahren nach Anspruch 2, dadurch gekennzeichnet, dass der erste Radikalkatalysator von Schritt a) aus den Verbindungen ausgewählt wurde, die aus Peroxiden und Beschleunigern gebildet sind.

4. Verfahren nach Anspruch 3, dadurch gekennzeichnet, dass der erste Radikalkatalysator von Schritt a) ein Redoxpaar aus organischem Hydroperoxid und einem metallischen Salz als Beschleuniger umfasst, vorzugsweise ein Redoxpaar aus Ethylmethylketonhydroperoxid (MEKP) und Kobaltoctoat oder Kobaltnaphthenat, oder das Redoxpaar aus Cumenhydroperoxid und Mangannaphthenat oder Manganoctoat, insbesondere bevorzugt aus einem Redoxpaar aus Ethylmethylketonhydroperoxid (MEKP) und Kobaltoctoat oder Kobaltnaphthenat.

5. Verfahren nach einem der vorangehenden Ansprüche, dadurch gekennzeichnet, dass die Konzentration des ersten freien Radikals der Gelschichtlage im Bereich von 0,1 bis 10 Gewichtsprozent der Gelschichtlage, vorzugsweise im Bereich von etwa 0,5 bis 5 und insbesondere bevorzugt im Bereich von 0,75 bis 2,5 Gewichtsprozent der Gelschichtlage liegt.

6. Verfahren nach einem der vorangehenden Ansprüche, dadurch gekennzeichnet, dass Schritt a) das Aufbringen einer Lage der Gelschicht auf beide Seiten des Innenbereichs eines zweiteiligen Formstücks umfasst.

7. Verfahren nach einem der vorangehenden Ansprüche, dadurch gekennzeichnet, dass Schritt b) das Halten der Innenfläche des Formstücks in einem Zustand umfasst, dass die Temperatur der Gelschichtlage im Bereich von 20 bis 35°C liegt, vorzugsweise von etwa 30 bis 35°C.

8. Verfahren nach einem der vorangehenden Ansprüche, dadurch gekennzeichnet, dass Schritt b) das Halten der Innenfläche des Formstücks in einem Zustand umfasst, dass die Temperatur der Gelschichtlage im Bereich von etwa 0 bis 35°C liegt, bis die Oberfläche der Gelschichtlagenbeschichtung klebrig trocken geworden ist.

9. Verfahren nach einem der vorangehenden Ansprüche, dadurch gekennzeichnet, dass die Faser, die im Faserverstärkungsmaterial von Schritt c) verwendet wurde, Glasfaser ist, vorzugsweise in Form einer Glasschnittmatte.

10. Verfahren nach einem der vorangehenden Ansprüche, dadurch gekennzeichnet, dass in Schritt c) der zweite Radikalkatalysator ausgewählt wurde aus: Lauroylperoxid, tertiärem Butylperoctoat, Benzoylperoxid, vorzugsweise Trigonox 42PR.

11. Verfahren nach einem der vorangehenden Ansprüche, dadurch gekennzeichnet, dass in Schritt c) die Konzentration des zweiten Radikalkatalysators im Bereich von 0,1 bis 10, vorzugsweise von etwa 0,5 bis 5, insbesondere bevorzugt im Bereich von 1,0 bis 2,5 Gewichtsprozent der Polyesterkomponente liegt.

12. Verfahren nach einem der vorangehenden Ansprüche, dadurch gekennzeichnet, dass Schritt c) das Aufbringen einer Schicht des Verstärkungsmaterials auf die Gelschichtlagenbeschichtung auf beiden Seiten im Innenbereich eines zweiteiligen Formstücks umfasst.

13. Verfahren nach einem der vorangehenden Ansprüche, dadurch gekennzeichnet, dass Schritt d) das Auflegen des inneren Kerns des Strukturelements, der eine Schichtstruktur aufweist, auf die Schicht des Verstärkungsmaterials umfasst.

14. Verfahren nach einem der vorangehenden Ansprüche, dadurch gekennzeichnet, dass Schritt d) das Auflegen des festen Kernmaterials auf die Schicht des Verstärkungsmaterials umfasst, wobei das feste Kernmaterial ein starrer Schaumstoff ist, ausgewählt aus: Epoxydharz, Phenoplast, Polyvinylchlorid (PVC), Polyurethankunststoff, Harnstoff-Formaldehyd-Harz, vorzugsweise Polyurethankunststoff, Polystyrolkunststoff, Polyvinylchlorid (PVC), Polyethylenkunststoff und meistbevorzugt Polyurethankunststoff.

15. Verfahren nach einem der vorangehenden Ansprüche, dadurch gekennzeichnet, dass Schritt d) das Auflegen eines festen Kernmaterials auf das Verstärkungsmaterial auf eine der beiden Innenflächen eines zweiteiligen Formstücks umfasst.

16. Verfahren nach einem der vorangehenden Ansprüche, dadurch gekennzeichnet, dass Schritt e) das Schließen des Formstücks um das feste Kernmaterial durch festes Verbinden der beiden Teile des Formstücks umfasst, so dass die Luftmenge im Formstück auf einem akzeptablen Niveau bleibt.

17. Verfahren nach einem der vorangehenden Ansprüche, dadurch gekennzeichnet, dass Schritt f) das Erwärmen des Formstücks umfasst, so dass die Temperatur des Verstärkungsmaterials im Bereich von etwa 35 bis 100°C liegt, vorzugsweise von 40 bis 80°C, um den zweiten Radikalkatalysator zu aktivieren und das Verstärkungsmaterial zu härten.

18. Verfahren nach einem der vorangehenden Ansprüche, dadurch gekennzeichnet, dass Schritt f) das Erwärmen des Formstücks bei gleichzeitiger Anwendung von Druck umfasst, wobei der Druck vorzugsweise im Bereich von 1 bis 5N/cm² liegt, insbesondere von 1 bis 3N/cm² liegt.

19. Verfahren nach einem der vorangehenden Ansprüche, dadurch gekennzeichnet, dass Schritt f) das Erwärmen des Formstücks durch Anwendung des Drucks in kurzen Zeiträumen umfasst, beispielsweise in Zeiträumen von 10 bis 15 Sekunden.

20. Sandwichartiges Strukturelement, wie beispielsweise ein Türfach, vorzugsweise eine Tür, das mit dem Verfahren nach einem der vorangehenden Ansprüche hergestellt wurde und sich durch verbesserte Festigkeitseigenschaften und das Fehlen von Blasenbildungen auszeichnet.

## Revendications

1. Procédé de fabrication d'un élément de structure en sandwich comportant un noyau solide revêtu d'une couche de matériau de renfort fibreux et d'une couche extérieure d'enduit gélifié, avec un moule composé d'au moins deux parties, lequel procédé comprend les étapes de :
a) application sur la surface intérieure du moule d'une couche d'enduit gélifié composée d'un polyester insaturé, qui contient un premier catalyseur à radicaux libres ;
b) maintien de la surface intérieure dudit moule à une première température de la couche d'enduit gélifié afin d'activer le premier catalyseur à radicaux libres et de polymériser partiellement la couche d'enduit gélifié ;
c) application d'une couche de matériau de renfort fibreux contenant un polyester insaturé et un second catalyseur à radicaux libres, agissant à une température de 35 à 175°C, sur la couche d'enduit gélifié partiellement durcie ;
d) mise en place d'un noyau solide de l'élément de structure sur la couche de matériau de renfort fibreux ;
e) fermeture du moule sur le noyau solide par la réunion des deux parties du moule ;
f) tenue du moule de telle sorte que la couche de matériau de renfort fibreux se trouve à une seconde température de 35 à 175°C afin d'activer le deuxième catalyseur à radicaux libres et de polymériser le matériau de renfort fibreux ; et
g) ouverture du moule et retrait de l'ébauche, et finition de celle-ci si nécessaire,
caractérisé en ce que :
i) ledit premier catalyseur à radicaux libres agit à une température comprise entre 0 et 35°C environ, et en ce que
ii) ladite première température est plus basse que ladite seconde température et est comprise entre 0 et 35°C.

2. Procédé selon la revendication 1, caractérisé en ce que l'étape a) comprend l'application d'une couche d'enduit gélifié directement sur la surface intérieure du moule, de préférence par injection.

3. Procédé selon la revendication 1 ou 2, caractérisé en ce que le premier catalyseur à radicaux libres de l'étape a) a été sélectionné parmi les peroxydes et les composés accélérateurs.

4. Procédé selon la revendication 3, caractérisé en ce que le premier catalyseur à radicaux libres de l'étape a) comprend un couple redox formé par un hydroperoxyde organique et un accélérateur aux sels métalliques, de préférence un couple redox formé par l'hydroperoxyde de méthyl-éthyl-cétone et l'octoate de cobalt ou le naphténate de cobalt, un le couple redox formé par l'hydroperoxyde de cumène et le naphténate de manganèse ou l'octoate de manganèse, et en particulier un couple redox formé par l'hydroperoxyde de méthyl-éthyl-cétone et l'octoate de cobalt ou le naphténate de cobalt.

5. Procédé selon l'une quelconque des revendications précédents, caractérisée en ce que la concentration du premier radical libre dans la couche d'enduit gélifié est de l'ordre de 0,1 à 10 %, de préférence de 0,5 à 5 % environ et en particulier de 0,75 à 2,5 % du poids de la couche d'enduit gélifié.

6. Procédé selon l'une quelconque des revendications précédentes, caractérisé en ce que l'étape a) comprend l'application d'une couche dudit enduit gélifié à l'intérieur des deux parties d'un moule en deux parties.

7. Procédé selon l'une quelconque des revendications précédentes, caractérisé en ce que l'étape b) comprend la tenue de la surface intérieure dudit moule dans des conditions telles que la température de la couche d'enduit gélifié soit comprise entre 20 et 35°C, de préférence entre 30 et 35°C.

8. Procédé selon l'une quelconque des revendications précédentes, caractérisé en ce que l'étape b) comprend la tenue de la surface intérieure dudit moule dans des conditions telles telles que la température de l'enduit gélifié soit comprise entre 0 et 35°C environ, jusqu'à ce que la surface de la couche d'enduit gélifié soit sèche et collante.

9. Procédé selon l'une quelconque des revendications précédentes, caractérisé en ce que les fibres utilisées dans le matériau de renfort fibreux de l'étape c) sont des fibres de verre, de préférence sous la forme d'un mat de fils coupés.

10. Procédé selon l'une quelconque des revendications précédentes, caractérisé en ce que dans l'étape c), le second catalyseur à radicaux libres est sélectionné parmi les composés suivants : peroxyde de lauroyle, peroctoate de butyle tertiaire, peroxyde de benzoyle, de préférence Trigonox 42PR.

11. Procédé selon l'une quelconque des revendications précédentes, caractérisé en ce que dans l'étape c), la concentration du second catalyseur à radicaux libres est de l'ordre de 0,1 à 10 %, de préférence de 0,5 à 5 % environ et en particulier de 1,0 à 2,5 % du poids de la composante polyester.

12. Procédé selon l'une quelconque des revendications précédentes, caractérisé en ce que l'étape c) comprend l'application d'une couche dudit matériau de renfort sur la couche d'enduit gélifié à l'intérieur des deux parties d'un moule en deux parties.

13. Procédé selon l'une quelconque des revendications précédentes, caractérisé en ce que l'étape d) comprend la mise en place du noyau intérieur de l'élément de structure, qui est une structure laminaire, sur la couche de matériau de renfort.

14. Procédé selon l'une quelconque des revendications précédentes, caractérisé en ce que l'étape d) comprend la mise en place sur la couche de matériau de renfort du noyau en matériau solide, qui est un plastique cellulaire rigide sélectionné dans le groupe suivant : résine époxy, plastique phénolique, plastique au chlorure de polyvinyle (PVC), plastique au polyuréthane, résine urée formaldéhyde, de préférence plastique polyuréthane, plastique au polystyrène, plastique au chlorure de polyvinyle, plastique au polystyrène, et en particulier plastique au polyuréthane.

15. Procédé selon l'une quelconque des revendications précédentes, caractérisé en ce que l'étape d) comprend la mise en place d'un matériau de noyau solide sur le matériau de renfort sur l'une des deux surfaces intérieures d'un moule en deux parties.

16. Procédé selon l'une quelconque des revendications précédentes, caractérisé en ce que l'étape e) comprend la fermeture du moule sur le matériau de noyau solide par assemblage étanche des deux parties du moule de manière à maintenir la quantité d'air contenue dans le moule à un niveau acceptable.

17. Procédé selon l'une quelconque des revendications précédentes, caractérisé en ce que l'étape f) comprend le chauffage du moule de telle sorte que la température du matériau de renfort soit de l'ordre de 35 à 100°C, de préférence 40 à 80°C, afin d'activer le second catalyseur à radicaux libres et de polymériser le matériau de renfort.

18. Procédé selon l'une quelconque des revendications précédentes, caractérisé en ce que l'étape f) comprend le chauffage du moule avec application simultanée de pression, de préférence de l'ordre de 1 à 5 N/cm² et plus particulièrement de 1 à 3 N/cm².

19. Procédé selon l'une quelconque des revendications précédentes, caractérisé en ce que l'étape f) comprend le chauffage du moule avec application de pression pendant de courtes périodes, par exemple par périodes de 10 à 15 secondes.

20. Élément de structure de type sandwich, par exemple une porte ou un panneau, de préférence une porte, produit par le procédé selon l'une quelconque des revendications précédentes, lequel élément de structure présente des propriétés de solidité améliorées et est exempt de bulles.
